# EUROPÄISCHE PATENTANMELDUNG

(11) **EP 1 610 021 A1**
(43) Veröffentlichungstag der Anmeldung: **28.12.2005**
(21) Anmeldenummer: 05012848.7
(22) Anmeldetag: 15.06.2005
(51) Int. Cl.: F16D 25/10, F16D 21/06, F16D 25/08

(54) **Drehmomentübertragungseinrichtungssystem**

(30) Priorität: 21.06.2004 DE 102004029778; 20.10.2004 DE 102004050997
(71) Anmelder: LuK Lamellen und Kupplungsbau Beteiligungs KG, 77815 Bühl (DE)
(72) Erfinder: Agner, Ivo, 77815 Bühl (DE); Reik, Wolfgang, Dr., 77815 Bühl (DE)

(57) **Zusammenfassung**

Die Erfindung betrifft ein Drehmomentübertragungseinrichtungssystem für den Antriebsstrang (1) eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit mindestens einer Getriebeeingangswelle (31,42) mit mindestens einer trocken laufenden und mindestens einer nass laufenden Kupplungseinrichtung (6,60).

Um ein Drehmomentübertragungseinrichtungssystem zu schaffen, das sowohl für den Einbau von trockenen als auch von nass laufenden Kupplungseinrichtungen geeignet ist, umfasst die Betätigungseinrichtung ein Betätigungslager (48,49), das mit Hilfe einer Betätigungsvorrichtung (51,52) betätigbar ist, die sowohl zur Betätigung der nass laufenden Kupplungseinrichtung (6) als auch zur Betätigung der trocken laufenden Kupplungseinrichtung (600) verwendbar ist.

## Beschreibung

Die Erfindung betrifft ein Drehmomentübertragungseinrichtungssystem für den Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit mindestens einer trocken laufenden und mindestens einer nass laufenden Kupplungseinrichtung.

Es gibt Kupplungsgetriebe, insbesondere Doppelkupplungsgetriebe, mit trocken laufenden und nass laufenden Kupplungen, insbesondere Doppelkupplungen. Herkömmliche trockene Kupplungen, insbesondere Doppelkupplungen, werden über eine elektromotorische/mechanische oder eine elektromotorische/hydraulische Aktorik betätigt, die auch zur Gangverstellung verwendet werden kann. Herkömmliche nass laufende Kupplungen, insbesondere Doppelkupplungen, werden über eine hydraulische Aktorik betätigt, deren Versorgungspumpe direkt vom Verbrennungsmotor angetrieben wird. Die bei nass laufenden Kupplungen bekannte Aktorik übernimmt sowohl die Stellfunktionen der Kupplung, die Gangbetätigung als auch die Steuerung der Kühlfunktion der nass laufenden Kupplung.

Aufgabe der Erfindung ist es, ein Drehmomentübertragungseinrichtungssystem gemäß Oberbegriff des Anspruchs 1 zu schaffen, das sowohl für den Einbau von trocken- als auch nass laufenden Kupplungseinrichtungen geeignet ist. Dabei soll der Montageaufwand gering sein.

Die Aufgabe ist durch ein Drehmomentübertragungseinrichtungssystem für den Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit mindestens einer trocken laufenden und mindestens einer nass laufenden Kupplungseinrichtung gelöst, wobei entweder die nass laufende Kupplungseinrichtung oder alternativ die trocken laufende Kupplungseinrichtung zwischen die Abtriebswelle der Antriebseinheit und die Getriebeeingangswelle montierbar und durch eine Betätigungseinrichtung betätigbar ist, wobei die Betätigungseinrichtung ein Betätigungslager umfasst, das mit Hilfe einer Betätigungsvorrichtung betätigbar ist, die sowohl zur Betätigung der nass laufenden Kupplungseinrichtung als auch zur Betätigung der trocken laufenden Kupplungseinrichtung verwendbar ist. Da die Betätigung der nassen und der trockenen Kupplungseinrichtung durch die gleiche Aktorik erfolgt, kann das Basisgetriebe des erfindungsgemäßen Drehmomentübertragungseinrichtungssystems sowohl mit einer nass als auch mit einer trocken laufenden Kupplungseinrichtung ausgestattet werden. Das erfindungsgemäße Drehmomentübertragungseinrichtungssystem liefert verschiedene Drehmomentübertragungseinrichtungen, die entweder eine trocken laufende oder eine nass laufende Kupplungseinrichtung umfassen. Beide Kupplungseinrichtungen werden durch die gleiche Betätigungsvorrichtung betätigt. Dadurch kann der Konstruktionsaufwand erheblich reduziert werden.

Ein bevorzugtes Ausführungsbeispiel des Drehmomentübertragungseinrichtungssystems ist dadurch gekennzeichnet, dass die Betätigungseinrichtung durch einen Antrieb angetrieben ist, der unter Zwischenschaltung des Betätigungslagers mit der Hebeleinrichtung gekoppelt ist. Im Vergleich zu herkömmlichen nass laufenden Doppelkupplungsgetrieben benötigt das Basisgetriebe des erfindungsgemäßen Drehmomentübertragungseinrichtungssystems keine Drehdurchführungen für rotierende Betätigungskolben, wie sie bei herkömmlichen nass laufenden Kupplungseinrichtungen verwendet werden. Das Einrücklager kann rein mechanisch oder hydrostatisch betätigt werden.

Ein weiteres bevorzugtes Ausführungsbeispiel des Drehmomentübertragungseinrichtungssystems ist dadurch gekennzeichnet, dass der Antrieb einen Elektromotor umfasst. Der elektromotorische Antrieb hat den Vorteil, dass er unabhängig von der Brennkraftmaschine ist. Es ist sinnvoll, auch die Gänge mit einer elektromotorischen/mechanischen oder einer elektromotorischen/hydraulischen Aktorik zu betätigen. Vorzugsweise wird die gleiche Aktorik sowohl zur Betätigung der Kupplungseinrichtung als auch der Gänge verwendet.

Ein weiteres bevorzugtes Ausführungsbeispiel des Drehmomentübertragungseinrichtungssystems ist dadurch gekennzeichnet, dass ein separates Kühlungs- und Schmiermodul mit der nass laufenden Kupplungseinrichtung verbindbar ist. Das Kühlungs- und Schmiermodul umfasst vorzugsweise eine Ölpumpe, die zur Kühlung und Schmierung der Nasskupplung und eventuell anderer Teile des Getriebes dient. Durch die Funktionstrennung von Kühlung/Schmierung und Betätigungsaktorik ist es möglich, eine für herkömmliche trockene Kupplungseinrichtungen zum Einsatz kommende elektromotorische/mechanische oder elektromotorische/hydraulische Aktorik auch zur Betätigung der nass laufenden Kupplungseinrichtung einzusetzen.

Ein weiteres bevorzugtes Ausführungsbeispiel des Drehmomentübertragungseinrichtungssystems ist dadurch gekennzeichnet, dass ein Trennmodul, welches das die Kupplungseinrichtung aufnehmende Volumen begrenzt, in das Getriebe montierbar ist. Das Trennmodul wird zum Beispiel von einem Kupplungsdeckel gebildet, der sich an dem Getriebegehäuse abstützt.

Ein weiteres bevorzugtes Ausführungsbeispiel des Drehmomentübertragungseinrichtungssystems ist dadurch gekennzeichnet, dass zwei nass laufende Kupplungsanordnungen koaxial in axialer Richtung überlappend zueinander angeordnet sind. Dadurch kann in axialer Richtung Bauraum eingespart werden.

Ein weiteres bevorzugtes Ausführungsbeispiel des Drehmomentübertragungseinrichtungssystems ist dadurch gekennzeichnet, dass zwei trocken laufende Kupplungsanordnungen koaxial und in radialer Richtung überlappend zueinander angeordnet sind. Radial innerhalb der Kupplungsanordnung kann jeweils eine Schwingungsdämpfungseinrichtung angeordnet sein.

Ein weiteres bevorzugtes Ausführungsbeispiel des Drehmomentübertragungseinrichtungssystems ist dadurch gekennzeichnet, dass wahlweise zwei nass oder trocken laufende Kupplungseinrichtungen in eine Drehmomentübertragungseinrichtung montierbar und mit der gleichen Betätigungseinrichtung betätigbar sind. Das erfindungsgemäße Drehmomentübertragungseinrichtungssystem umfasst ein Basisgetriebe, das sowohl mit einer trocken als auch mit einer nass laufenden Kupplungseinrichtung ausgestattet werden kann. Das Basisgetriebe benötigt keine Drehdurchführungen für rotierende Betätigungskolben und beinhaltet lediglich den für die beiden Kupplungsarten gleichen Einrückmechanismus. Für die nass laufende Kupplungseinrichtung ist zusätzlich eine in eine Kupplungsglocke integrierte Niederdruckölpumpe erforderlich, die bei der trocken laufenden Kupplung entfallen kann. Die erforderlichen Getriebeänderungen zwischen trockenen und nassen Doppelkupplungen betreffen also lediglich die Kupplungsglocke, wobei bei der Trockenkupplung die Komponenten Ölkühler, Ölpumpe, Saugregelventil, interne Kanalführung und Trennwand zwischen Trocken- und Nassraum entfallen können.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine Drehmomentübertragungseinrichtung eines erfindungsgemäßen Systems mit einer nass laufenden Doppelkupplung im Halbschnitt;
- Figur 2: die Drehmomentübertragungseinrichtung aus Figur 1 mit einer trocken laufenden Doppelkupplung und
- Figur 3: eine Drehmomentübertragungseinrichtung gemäß einem weiteren Ausführungsbeispiel mit einer integrierten Ölpumpe im Längsschnitt.

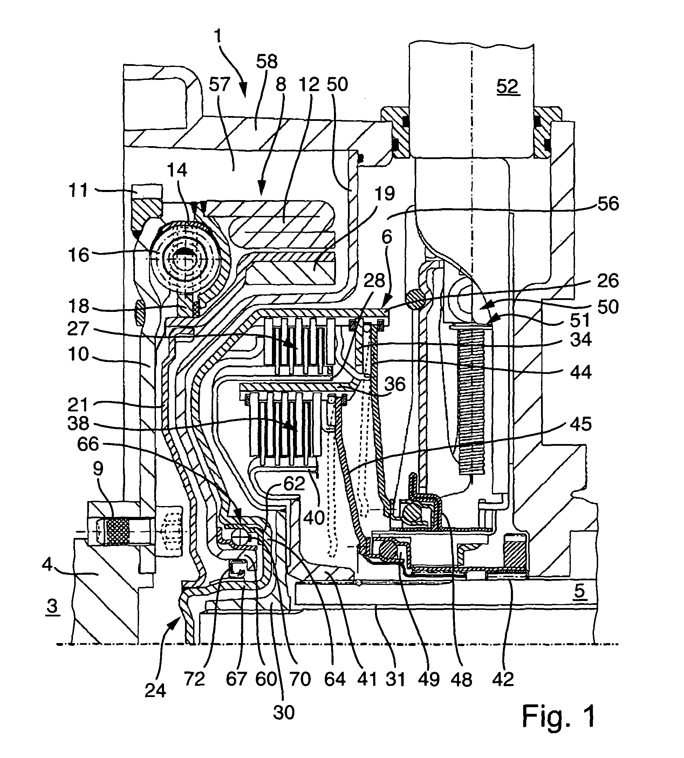

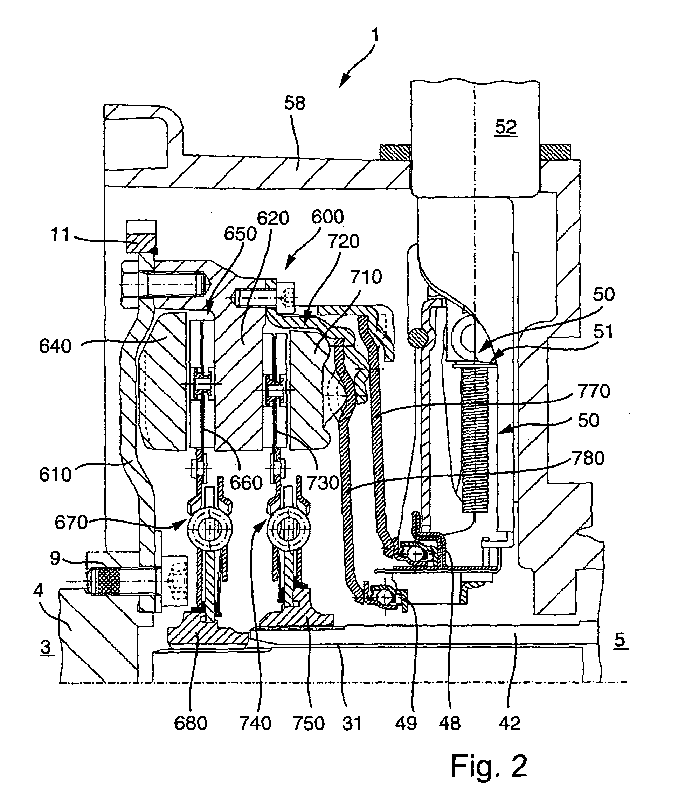

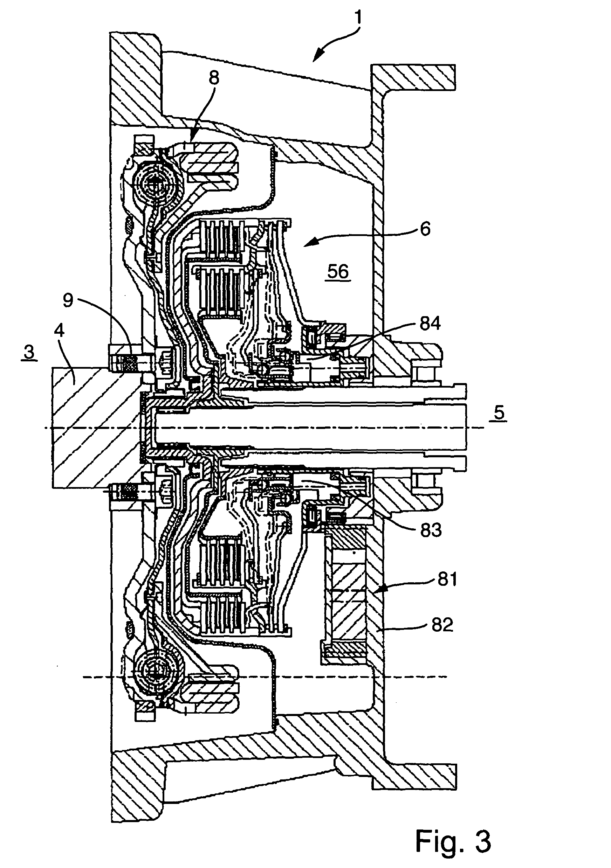

In den Figuren 1 bis 3 sind verschiedene Alternativen des erfindungsgemäßen Drehmomentübertragungseinrichtungssystems dargestellt, die entweder eine nass laufende Kupplungseinrichtung (siehe Figur 1 und 3) oder eine trocken laufende Kupplungseinrichtung (siehe Figur 2) umfassen. Gemäß der vorliegenden Erfindung ist die gleiche Betätigungsvorrichtung sowohl zur Betätigung der trocken laufenden als auch zur Betätigung der nass laufenden Kupplungseinrichtung verwendbar. Dadurch verringert sich der Konstruktionsaufwand erheblich.

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine nass laufende Doppelkupplung 6 in Lamellenbauweise angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Die Kurbelwelle 4 der Brennkraftmaschine 3 ist über eine Schraubverbindung 9 fest mit einem Eingangsteil 10 der Schwingungsdämpfungseinrichtung 8 verbunden. Das Eingangsteil 10 der Schwingungsdämpfungseinrichtung 8 hat im Wesentlichen die Gestalt einer sich in radialer Richtung erstreckenden Kreisringscheibe, an die radial außen ein Anlasserzahnkranz 11 angeschweißt ist. Außerdem ist an das Eingangsteil 10 der Schwingungsdämpfungseinrichtung 8 eine Schwungmasse 12 angeschweißt. Des Weiteren ist an dem Eingangsteil 10 der Schwingungsdämpfungseinrichtung 8 ein Schwingungsdämpferkäfig 14 befestigt, in dem mehrere Energiespeichereinrichtungen, insbesondere Federeinrichtungen 16, zumindest teilweise aufgenommen sind. In die Federeinrichtungen 16 greift ein Ausgangsteil 18 der Schwingungsdämpfungseinrichtung 8 ein. An dem Ausgangsteil 18 der Schwingungsdämpfungseinrichtung 8 ist eine weitere Schwungmasse 19 befestigt. Das Ausgangsteil 18 der Schwingungsdämpfungseinrichtung 8 ist über ein Verbindungsteil 21 fest mit einem Eingangsteil 24 der Doppelkupplung 6 verbunden. Das Kupplungseingangsteil 24 ist einstückig mit einem Außenlamellenträger 26 einer ersten Lamellen-Kupplungsanordnung 27 verbunden. Radial innerhalb des Außenlamellenträgers 26 ist ein Innenlamellenträger 28 der ersten Lamellen-Kupplungsanordnung 27 angeordnet. Der Innenlamellenträger 28 ist radial innen an einem Nabenteil 30 befestigt, das über eine Verzahnung drehfest mit einer ersten Getriebeeingangswelle 31 verbunden ist.

Das Kupplungseingangsteil 24 beziehungsweise der einstückig mit diesem verbundene Außenlamellenträger 26 der ersten Lamellen-Kupplungsanordnung 27 ist über ein Verbindungsteil 34 drehfest mit einem Außenlamellenträger 36 einer zweiten Lamellen-Kupplungsanordnung 38 verbunden. Radial innerhalb des Außenlamellenträgers 36 ist ein Innenlamellenträger 40 der zweiten Lamellen-Kupplungsanordnung 38 angeordnet, der radial innen fest mit einem Nabenteil 41 verbunden ist. Das Nabenteil 41 ist über eine Verzahnung drehfest mit einer zweiten Getriebeeingangswelle 42 verbunden, die als Hohlwelle ausgebildet ist. In der zweiten Getriebeeingangswelle 42 ist die erste Getriebeeingangswelle 31 drehbar angeordnet.

Die beiden Lamellen-Kupplungsanordnungen 27 und 38 werden über Betätigungshebel 44 und 45 betätigt, deren radial inneren Enden sich an Betätigungslagern 48, 49 abstützen. Die Betätigungslager 48, 49 werden über eine Betätigungsvorrichtung 50 betätigt, die ein Getriebe 51 umfasst und von einem elektromotorischen Drehantrieb 52 angetrieben ist.

Zwischen dem Verbindungsteil 21 und dem Außenlamellenträger 26 der ersten Lamellen-Kupplungsanordnung 27 ist ein Kupplungsdeckel 55 angeordnet, der radial außen an einem Getriebegehäuseabschnitt 58 befestigt ist. Der Kupplungsdeckel 55 kann auch einstückig mit dem Getriebegehäuseabschnitt 58 ausgebildet sein. Der Kupplungsdeckel 55 trennt einen Nassraum 56, in dem die beiden Lamellen-Kupplungsanordnungen 27 und 38 angeordnet sind, von einem trockenen Aufnahmeraum 57, in dem die Schwingungsdämpfungseinrichtung 8 angeordnet ist. Der Kupplungsdeckel 55 weist radial innen ein, im Querschnitt betrachtet, im Wesentlichen L-förmiges Ende 60 auf, das in einen Ringraum 62 ragt, der von einem Abschnitt des Kupplungseingangsteils 24 mit einem U-förmigen Querschnitt gebildet wird. Der U-förmige Querschnitt des Aufnahmeraums 62 umfasst eine radial angeordnete Basis 64, von der sich zwei Schenkel 66 und 67 in axialer Richtung erstrecken.

Zwischen dem Kupplungseingangsteil 24 und dem Kupplungsdeckel 55 ist ein Dünnringkugellager 70 angeordnet, das sich sowohl in radialer als auch in axialer Richtung an dem Ende 60 des Kupplungsdeckels 55 einerseits und an der Basis 64 und dem Schenkel 66 des Kupplungseingangsteils 24 andererseits abstützt. Das Dünnringkugellager 70 weist eine gegenüber der radialen Richtung verkippte Berührungsnormale auf.

Radial innerhalb und axial überlappend zu dem Dünnringkugellager 70 ist ein Radialwellendichtring 72 zwischen dem Ende 60 des Kupplungsdeckels 55 und dem Kupplungseingangsteil 24 angeordnet. Das Dünnringkugellager 70 ist vollständig in dem Nassraum 56 angeordnet, der durch den Radialwellendichtring 72 von dem Trockenraum 57 getrennt ist.

In Figur 2 ist die in Figur 1 dargestellte Drehmomentübertragungseinrichtung mit einer trocken laufenden Doppelkupplung 600 dargestellt. Zur Bezeichnung gleicher Teile wie in Figur 1 werden die gleichen Bezugszeichen verwendet. Um Wiederholungen zu vermeiden, wird auf die vorangegangene Beschreibung der Figur 1 verwiesen. Im Folgenden wird nur auf die Unterschiede zwischen den beiden Ausführungsbeispielen eingegangen.

Die in Figur 2 dargestellte Doppelkupplung 600 ist über ein Eingangsteil 610 mit der Kurbelwelle 4 gekoppelt. Radial außen ist an dem Eingangsteil 610 eine Gegendruckplatte 620 der Doppelkupplung 600 befestigt. Die Gegendruckplatte 620 wirkt mit einer Druckplatte 640 einer ersten trocken laufenden Reibungskupplung 650 zusammen. Zwischen der Gegendruckplatte 620 und der Druckplatte 640 sind Reibbeläge angeordnet, die an einem Ausgangsteil 660 der ersten trocken laufenden Reibungskupplung 650 befestigt sind. Zwischen das Ausgangsteil 660 und ein Nabenteil 680 ist eine Schwingungsdämpfungseinrichtung 670 geschaltet. Das Nabenteil 680 ist drehfest mit der ersten Getriebeeingangswelle 31 verbunden. Die Gegendruckplatte 620 wirkt auf der der Brennkraftmaschine 3 abgewandten Seite mit einer Druckplatte 710 einer zweiten trocken laufenden Reibungskupplung 720 zusammen. Zwischen der Druckplatte 710 und der Gegendruckplatte 620 sind Reibbeläge angeordnet, die an einem Ausgangsteil 730 der zweiten Reibungskupplung 720 befestigt sind. Zwischen das Ausgangsteil 730 und ein Nabenteil 750 ist eine Schwingungsdämpfungseinrichtung 740 geschaltet. Das Nabenteil 750 ist drehfest mit der zweiten Getriebeeingangswelle 42 verbunden.

Die Reibungskupplungen 650 und 720 werden über Betätigungshebel 770, 780 betätigt, an deren radial inneren Enden die Einrücklager 48, 49 angreifen. Die Einrücklager 48, 49 werden durch die gleiche Betätigungsvorrichtung 50 betätigt, wie bei dem in Figur 1 dargestellten Ausführungsbeispiel mit einer nass laufenden Kupplungseinrichtung 6.

Bei dem in Figur 3 dargestellten Ausführungsbeispiel ist eine Zahnradpumpe 81 in dem Nassraum 56 an einem Getriebewandungsabschnitt 82 angebracht. Die Pumpe 81 ist mit der Kurbelwelle 4 der Brennkraftmaschine 3 gekoppelt. Die Betätigung der nassen Doppelkupplung 6 erfolgt durch hydraulische Betätigungseinrichtungen 83 und 84.

### Bezugszeichenliste

- 1,: Antriebsstrang
- 2.: -
- 3.: Antriebseinheit
- 4.: Kurbelwelle
- 5.: Getriebe
- 6.: Doppelkupplung
- 7.: -
- 8.: Schwingungsdämpfungseinrichtung
- 9.: Schraubverbindung
- 10.: Eingangsteil von 8
- 11.: Anlasserzahnkranz
- 12.: Masse
- 13.: -
- 14.: Schwingungsdämpferkäfig
- 15.: -
- 16.: Federeinrichtung
- 17.: -
- 18.: Ausgangsteil von 8
- 19.: Masse
- 20.: -
- 21.: Verbindungsteil
- 22.: -
- 23.: -
- 24.: Kupplungseingangsteil
- 25.: -
- 26.: Außenlamellenträger
- 27.: erste Lamellen-Kupplungsanordnung
- 28.: Innenlamellenträger
- 29.: -
- 30.: Nabenteil
- 31.: erste Getriebeeingangswelle
- 32.: -
- 33.: -
- 34.: Verbindungsteil
- 35.: -
- 36.: Außenlamellenträger
- 37.: -
- 38.: zweite Lamellen-Kupplungsanordnung
- 39.: -
- 40.: Innenlamellenträger
- 41.: Nabenteil
- 42.: zweite Getriebeeingangswelle
- 43.: -
- 44.: Betätigungshebel
- 45.: Betätigungshebel
- 46.: -
- 47.: -
- 48.: Betätigungslager
- 49.: Betätigungslager
- 50.: Betätigungsvorrichtung
- 51.: Getriebe
- 52.: Drehantrieb
- 53.: -
- 54.: -
- 55.: Kupplungsdeckel
- 56.: Nassraum
- 57.: Aufnahmeraum
- 58.: Getriebegehäuseabschnitt
- 59.: -
- 60.: Ende
- 61.: -
- 62.: Aufnahmeraum
- 63.: -
- 64.: Basis
- 65.: -
- 66.: Schenkel
- 67.: Schenkel
- 68.: -
- 69.: -
- 70.: Dünnringkugellager
- 71.: -
- 72.: Radialwellendichtung
- 73.: -
- 74.: -
- 75. 76.: -
- 77.: -
- 78.: -
- 79.: -
- 80.: -
- 81.: Pumpe
- 82.: Getriebewandung
- 83.: hydraulische Betätigungseinrichtung
- 85.: hydraulische Betätigungseinrichtung
- 600.: Doppelkupplung
- 610.: Eingangsteil
- 620.: Gegendruckplatte
- 630.-
- 640.: Druckplatte
- 650.: erste trocken laufende Reibungskupplung
- 660.: Ausgangsteil
- 670.: Schwingungsdämpfungseinrichtung
- 680.: Nabenteil
- 690.: -
- 700.: -
- 710.: Druckplatte
- 720.: zweite Reibungskupplung
- 730.: Ausgangsteil
- 740.: Schwingungsdämpfungseinrichtung
- 750.: Nabenteil
- 760.: -
- 770: .Betätigungshebel
- 780.: Betätigungshebel
- 790.: -
- 800.: -

## Patentansprüche

1. Drehmomentübertragungseinrichtungssystem für den Antriebsstrang (1) eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit mindestens einer Getriebeeingangswelle (31,42), mit mindestens einer trocken laufenden und mindestens einer nass laufenden Kupplungseinrichtung (6,60), wobei entweder die nass laufende Kupplungseinrichtung (6) oder alternativ die trocken laufende Kupplungseinrichtung (60) zwischen die Abtriebswelle (4) der Antriebseinheit (3) und die Getriebeeingangswelle (31,42) montierbar und durch eine Betätigungseinrichtung (44,45,48,49,51,52) betätigbar ist, wobei die Betätigungseinrichtung ein Betätigungslager (48,49) umfasst, das mit Hilfe einer Betätigungsvorrichtung (51,52) betätigbar ist, die sowohl zur Betätigung der nass laufenden Kupplungseinrichtung (6) als auch zur Betätigung der trocken laufenden Kupplungseinrichtung (60) verwendbar ist.

2. Drehmomentübertragungseinrichtungssystem nach Anspruch 1, **dadurch gekennzeichnet, dass** die Betätigungseinrichtung eine Hebeleinrichtung (44,45) umfasst, die sowohl zur Betätigung der nass laufenden Kupplungseinrichtung (6) als auch zur Betätigung der trocken laufenden Kupplungseinrichtung (60) verwendbar ist.

3. Drehmomentübertragungseinrichtungssystem nach Anspruch 2, **dadurch gekennzeichnet, dass** die Betätigungseinrichtung durch einen Antrieb (52) angetrieben ist, der unter Zwischenschaltung des Betätigungslagers (48,49) mit der Hebeleinrichtung (44,45) gekoppelt ist.

4. Drehmomentübertragungseinrichtungssystem nach Anspruch 3, **dadurch gekennzeichnet, dass** der Antrieb einen Elektromotor (52) umfasst.

5. Drehmomentübertragungseinrichtungssystem nach einem der vorhergehenden Ansprüche, **dadurch gekennzeichnet, dass** ein separates Kühlungs- und Schmiermodul (81) mit der nass laufenden Kupplungseinrichtung (6) verbindbar ist.

6. Drehmomentübertragungseinrichtungssystem nach einem der vorhergehenden Ansprüche, **dadurch gekennzeichnet, dass** ein Trennmodul (55), welches das die Kupplungseinrichtung (6) aufnehmende Volumen begrenzt, in das Getriebe montierbar ist.

7. Drehmomentübertragungseinrichtungssystem nach einem der vorhergehenden Ansprüche, **dadurch gekennzeichnet, dass** zwei nass laufende Kupplungsanordnungen (27,38) koaxial und in axialer Richtung überlappend zueinander angeordnet sind.

8. Drehmomentübertragungseinrichtungssystem nach einem der vorhergehenden Ansprüche, **dadurch gekennzeichnet, dass** zwei trocken laufende Kupplungsanordnungen (65,72) koaxial und in radialer Richtung überlappend zueinander angeordnet sind.

9. Drehmomentübertragungseinrichtungssystem nach einem der vorhergehenden Ansprüche, **dadurch gekennzeichnet, dass** zwei nass und zwei trocken laufende Kupplungseinrichtungen in eine Drehmomentübertragungseinrichtung montierbar und mit der gleichen Betätigungsvorrichtung betätigbar sind.
